(19) Europäisches Patentamt
European Patent Office
Office européen des brevets

(11) EP 4 722 981 A1

(12) EUROPEAN PATENT APPLICATION

(43) Date of publication:
08.04.2026 Bulletin 2026/15

(51) International Patent Classification (IPC):
G06N 3/045 (2023.01)        G06N 3/0475 (2023.01)
G06N 3/08 (2023.01)

(21) Application number: 25206713.7

(22) Date of filing: 03.10.2025

(52) Cooperative Patent Classification (CPC):
G06N 3/045; G06N 3/0475; G06N 3/08

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH LA MA MD TN

(30) Priority: 03.10.2024 US 202463703128 P

(71) Applicant: Google LLC
Mountain View, CA 94043 (US)

(72) Inventors:
• WANG, Qifei
Mountain View, 94043 (US)

• FAN, Ying
Madison, 53715 (US)
• ZHAO, Yang
Mountain View, 94043 (US)
• RAMACHANDRAN, Deepak
Mountain View, 94043 (US)
• YANG, Feng
Mountain View, 94043 (US)
• JAIN, Rahul Anant
Mountain View, 94043 (US)

(74) Representative: Thorniley, Peter
Venner Shipley LLP
200 Aldersgate
London EC1A 4HD (GB)

(54) **FINE-TUNING A TARGET GENERATIVE NEURAL NETWORK USING AN IMPROVEMENT GENERATIVE NEURAL NETWORK**

(57) Methods, systems, and apparatuses, including computer programs encoded on computer storage media, for training a target generative neural network over a plurality of training iterations. At each iteration, a first data item is generated by processing a conditioning input using the target generative neural network. An improvement generative neural network then processes the first data item and the conditioning input to generate a second, preferred data item. A training example is generated that includes the first and second data items and indicates that the second data item is preferred over the first. The target generative neural network is then trained on this training example. By using this iterative process to dynamically generate preference data, the described techniques improve the performance of the generative neural network beyond the limitations of static, offline datasets without requiring computationally expensive reward models or external human annotation.

EP 4 722 981 A1

**Description**

BACKGROUND

This specification relates to processing inputs using neural networks.

Neural networks are machine learning models that employ one or more layers of nonlinear units to predict an output for a received input. Some neural networks include one or more hidden layers in addition to an output layer. The output of each hidden layer is used as input to the next layer in the network, i.e., the next hidden layer or the output layer. Each layer of the network generates an output from a received input in accordance with current value inputs of a respective set of parameters.

SUMMARY

This specification describes a system implemented as computer programs on one or more computers in one or more locations that generates an output data item conditioned on a conditioning input using a generative neural network.

Generally, the conditioning input characterizes one or more desired properties for the data item, i.e., characterizes one or more properties that the final data item generated by the system should have.

More specifically, this specification describes how a system can fine-tune the generative neural network to improve the performance of the generative neural network after the neural network has originally been trained. That is, the system fine-tunes, i.e., further trains, an already-trained generative neural network so that the generative neural network can more accurately generate output data items, e.g., output data items that align with preferences reflected in a preference data set.

Examples of conditioning inputs and data items are described below. As one example, a conditioning input can be a text prompt (e.g., "A guinea pig riding a motorcycle") and the corresponding data item can be an image that depicts the content of the text prompt.

In some cases, the generative neural network is a diffusion neural network.

Particular embodiments of the subject matter described in this specification can be implemented so as to realize one or more of the following advantages.

Existing techniques for fine-tuning generative neural networks, such as Direct Preference Optimization (DPO), are often constrained by their reliance on static, offline preference datasets. The performance of a generative neural network trained using this fixed dataset is inherently limited by the quality and diversity of the fixed dataset, as the generative neural networks is not trained on data generated from its own, evolving distribution (i.e., on-policy data). While some methods attempt to solve this by incorporating online data, they typically require a separate reward model or expensive, real-time human annotation to label the newly generated data. These approaches are not only computationally expensive and slow, but they also introduce the technical problem of "reward hacking," where the generative neural network may learn to exploit the reward function in unintended ways rather than genuinely improving output quality.

The high computational cost stems from the need to train and maintain a separate reward model, which itself is often a large and complex neural network requiring significant processing resources. Moreover, relying on online labeling, whether from human feedback or other models, can be computationally expensive due to the extensive infrastructure and resources needed to continuously generate, label, and integrate new data into the training pipeline.

Reward hacking is a significant technical risk where the generative neural network, in its effort to maximize a reward score, finds loopholes in the reward model. As a result, the generative neural network may generate outputs that receive a high score but fail to align with the actual, nuanced human preferences the reward model is meant to represent. As a result, the generative neural network does not produce genuinely higher-quality results.

Thus, there is a need for a technical solution that enables the continuous, online improvement of a generative neural network without the high computational costs and technical risks associated with external annotation or reward models.

This specification describes techniques that can address the aforementioned challenges. That is, by performing a plurality of training iterations where, at each iteration, a target generative neural network generates a first data item, an improvement generative neural network generates a second, preferred data item from the first data item, and a training example is created from this pair to further train the target generative neural network, the described techniques provide a novel technical solution for fine-tuning generative neural networks. The described techniques' iterative, self-contained process dynamically generates on-policy preference data, which overcomes the limitations of static offline datasets and improves the computer's functionality by enabling more efficient and effective model training.

By using an improvement generative neural network to automatically generate a preferred second data item from a first data item produced by the target generative neural network, the described techniques improve the functioning of the computer by creating a computationally efficient feedback loop that eliminates the need for a separate reward model or external annotation pipeline. This saves significant processing cycles and memory that would otherwise be consumed by training, storing, and running a separate, large-scale reward model, thereby making the fine-tuning process more resource-efficient and faster.

By training the improvement network on one or more objectives, the system ensures the improvement generative neural network develops a generic improvement capability without sacrificing output diversity or ignoring the input first data item. This prevents technical problems like "distribution collapse," where the improvement generative neural network would produce a limited variety of outputs. This improved training strategy leads to a more robust and effective improvement generative neural network, which in turn enhances the overall iterative fine-tuning process, resulting in a final target generative neural network with both higher quality and better diversity.

The objectives can include a first objective that measures, for a given preference example, an error between a target denoising output and a denoising output generated by processing a diffusion input comprising (i) a noisy representation of the winning data item in the preference example, (ii) a representation of the example conditioning input in the preference example, and (iii) a representation of the example losing data item in the preference example. The system can use this first objective to train the improvement neural network to learn the transformation from a less-preferred ("losing") data item to a more-preferred ("winning") data item, effectively capturing the "improvement direction" implicit in the preference data.

The objectives can include a second objective that measures, for a given data item sampled from the losing and winning data items in the preference examples, an error between a target denoising output and a denoising output generated by processing a diffusion input comprising (i) a noisy representation of the given data item in the preference example, (ii) a representation of the given data item and (iii) a null conditioning representation. The system can use this second objective to train the improvement generative neural network to pay attention to and utilize the information from the input data item. Without this objective, the improvement neural network might learn to ignore the input data item and simply generate a preferred data item based only on the conditioning input (e.g., text prompt).

The objectives can include a third objective that measures, for a given data item sampled from the losing and winning data items in the preference examples, an error between a target denoising output and a denoising output generated by processing a diffusion input comprising (i) a noisy representation of the given data item in the preference example (ii) a null data item representation (iii) a null conditioning representation. The system can use this third objective for maintaining the improvement generative neural network's fundamental ability to generate diverse and high-quality images without any specific conditions. It provides a stable baseline for generation and is crucial for the guidance techniques used during sampling to balance different conditions and ensure high-quality, diverse outputs.

The details of one or more embodiments of the subject matter of this specification are set forth in the accompanying drawings and the description below.

According to a first aspect there is provided a method performed by one or more computers for training a target generative neural network. The method includes, at each of a plurality of training iterations: receiving a conditioning input; processing the conditioning input using the target generative neural network to generate a first data item; processing the conditioning input and the first data item generated by the target generative neural network using an improvement generative neural network to generate a second data item; generating a training example that (i) comprises the conditioning input, the first data item, and the second data item and (ii) indicates that the second data item is preferred over the first data item as an output generated in response to the conditioning input; and training the target generative neural network on training data that includes the training example.

In some implementations, the target generative neural network is a diffusion neural network.

In some implementations, the improvement generative neural network is a diffusion neural network.

In some implementations, the first data item and the second data items are images.

In some implementations, the conditioning input comprises a text input.

In some implementations, the improvement generative neural network is a diffusion neural network, and processing the conditioning input and the first data item generated by the target generative neural network using an improvement generative neural network to generate a second data item comprises: initializing a representation of the second data item; updating the representation of the second data item at each of a plurality of update iterations, the updating comprising: generating a denoising output, the generating comprising processing a first diffusion input comprising (i) the representation of the second data item, (ii) a representation of the conditioning input, and (iii) a representation of the first data item using the diffusion neural network to generate a first denoising output; and updating the representation using the denoising output; and after the plurality of update iterations, generating the second data item from the representation of the second data item.

In some cases, initializing the representation comprises sampling at least some of the values in the representation from a noise distribution.

In some cases, the denoising output is an estimate of a noise component of the representation of the second data item.

In some cases, generating a denoising output further comprises: processing a second diffusion input comprising (i) the representation of the second data item and (ii) the representation of the first data item and (iii) a null conditioning representation using the diffusion neural network to generate a second denoising output; and combining at least the first and second denoising outputs to generate the denoising output.

In some cases, generating a denoising output further comprises: processing a third diffusion input comprising (i) the representation of the second data item (ii) a null data item representation and (iii) the null conditioning representation using the diffusion neural network to generate a third denoising output; and combining at least the first and second denoising outputs to generate the denoising output comprises: combining the first, second, and third denoising outputs to generate the denoising output.

In some cases, combining the first, second, and third denoising outputs to generate the denoising output comprises: combining the first, second, and third denoising outputs in accordance with a first guidance weight for the second denoising output and a second guidance weight for the third denoising output to generate the denoising output.

In some cases the method further includes prior to performing the plurality of training iterations: obtaining a preference data set, the preference data set comprising a plurality of preference examples, each preference example (i) comprising a respective example conditioning input, a respective winning data item, and a respective losing data item and (ii) indicating that the respective winning data item is preferred over the respective losing data item as an output generated in response to the respective example conditioning input; and training the improvement generative neural network on the preference data set.

In some implementations, the improvement generative neural network is a diffusion neural network, and processing the conditioning input and the first data item generated by the target generative neural network using an improvement generative neural network to generate a second data item comprises: initializing a representation of the second data item; updating the representation of the second data item at each of a plurality of update iterations, the updating comprising: generating a denoising output, the generating comprising processing a first diffusion input comprising (i) the representation of the second data item, (ii) a representation of the conditioning input, and (iii) a representation of the first data item using the diffusion neural network to generate a first denoising output; and updating the representation using the denoising output; and after the plurality of update iterations, generating the second data item from the representation of the second data item. For these same implementations, training the improvement generative neural network comprises training the improvement generative neural network on a first objective that measures, for a given preference example, an error between a target denoising output and a denoising output generated by processing a diffusion input comprising (i) a noisy representation of the winning data item in the preference example, (ii) a representation of the example conditioning input in the preference example, and (iii) a representation of the example losing data item in the preference example using the diffusion neural network.

In some cases, the denoising output is an estimate of a noise component of the representation of the second data item. For these same cases, the target denoising output is noise sampled to generate the noisy representation of the winning data item.

In some cases, training the improvement generative neural network comprises training the improvement generative neural network on a second objective that measures, for a given data item sampled from the losing and winning data items in the preference examples, an error between a target denoising output and a denoising output generated by processing a diffusion input comprising (i) a noisy representation of the given data item in the preference example, (ii) a representation of the given data item and (iii) a null conditioning representation using the diffusion neural network.

In some cases, the denoising output is an estimate of a noise component of the representation of the second data item. For these same cases, the target denoising output is noise sampled to generate the noisy representation of the given data item.

In some cases, training the improvement generative neural network comprises training the improvement generative neural network on a third objective that measures, for a given data item sampled from the losing and winning data items in the preference examples, an error between a target denoising output and a denoising output generated by processing a diffusion input comprising (i) a noisy representation of the given data item in the preference example (ii) a null data item representation (iii) a null conditioning representation using the diffusion neural network.

In some cases, the denoising output is an estimate of a noise component of the representation of the second data item. For these same cases, the target denoising output is noise sampled to generate the noisy representation of the given data item.

In some cases, training the target generative neural network on training data that includes the training example comprises training the target generative neural network on a supervised objective that, for each training example, is based on which data item in the training example is preferred.

In some cases, the supervised objective is a direct preference optimization (DPO) objective.

In some cases, the target generative neural network is a diffusion neural network, and the supervised objective is a diffusion DPO objective.

In some cases, the supervised objective is Identity Preference Optimization (IPO).

According to a second aspect there is provided a method performed by one or more computers that includes receiving a conditioning input; and processing the conditioning input using a target generative neural network to generate one or more output data items, wherein the generative neural network has been trained by performing the respective operations of any preceding claim.

According to a third aspect, there is provided the methods of the first or second aspect performed by a system comprising one or more computers and one or more storage devices storing instructions that when executed by the one or more computers cause the one more computers to perform the operations of the respective method.

According to a fourth aspect, there is provided the methods of the first or second aspect performed by one or more computer storage media storing instructions that when executed by one or more computers cause the one more computers to perform the operations of the respective method.

According to a fifth aspect there is provided a method performed by a system comprising one or more computers and one or more storage devices storing instructions for an improvement generative neural network, wherein the improvement generative neural network is configured to generate a second data item by performing a reverse diffusion process over a plurality of update iterations, and wherein, at one or more of the update iterations, the improvement generative neural network generates a denoising output by processing a diffusion input that is configurable to comprise: (a) a representation of a current noisy representation of the second data item, a representation of a conditioning input, and a representation of a first data item; (b) the representation of the current noisy representation of the second data item, the representation of the first data item, and a null conditioning representation; or (c) the representation of the current noisy representation of the second data item, a null data item representation, and a null conditioning representation.

In some cases of the fifth aspect, the improvement generative neural network comprises a U-Net architecture.

In some cases of the fifth aspect, the first data item and the second data item are images.

In some cases of the fifth aspect, the conditioning input comprises a text input.

In some cases of the fifth aspect, generating the denoising output comprises: (i) generating a first denoising output by processing the diffusion input configured according to (a); (ii) generating a second denoising output by processing the diffusion input configured according to (b); (iii) generating a third denoising output by processing the diffusion input configured according to (c); and (iv) combining the first, second, and third denoising outputs, wherein the combining is weighted by one or more guidance weights.

In some cases of the fifth aspect, the reverse diffusion process is performed in a latent space, and wherein the system further comprises a decoder neural network configured to generate the second data item in a pixel space from a final latent representation produced by the reverse diffusion process.

In some cases of the fifth aspect, the improvement generative neural network comprises one or more attention layers configured to condition the generation of the denoising output on the representation of the conditioning input.

According to a sixth aspect there is provided a method performed by one or more computers for training an improvement generative neural network. The method includes obtaining a preference data set comprising a plurality of preference examples, each preference example comprising a respective example conditioning input, a respective winning data item, and a respective losing data item; and training the improvement generative neural network on the preference data set by updating trainable parameters of the improvement generative neural network based on: (a) a first objective that measures an error for a given preference example based on a denoising output generated from a first diffusion input, the first diffusion input comprising (i) a noisy representation of the winning data item, (ii) a representation of the example conditioning input, and (iii) a representation of the example losing data item; (b) a second objective that measures an error for a given data item sampled from the preference examples based on a denoising output generated from a second diffusion input, the second diffusion input comprising (i) a noisy representation of the given data item, (ii) a representation of the given data item, and (iii) a null conditioning representation; and (c) a third objective that measures an error for a given data item sampled from the preference examples based on a denoising output generated from a third diffusion input, the third diffusion input comprising (i) a noisy representation of the given data item, (ii) a null data item representation, and (iii) a null conditioning representation.

In some cases of the sixth aspect, the improvement generative neural network is a diffusion neural network.

In some cases of the sixth aspect, the winning data item and the losing data item are images.

In some cases of the sixth aspect, the example conditioning input comprises a text input.

In some cases of the sixth aspect, the error measured by the first, second, and third objectives is a mean squared error between a target denoising output and the denoising output generated by the improvement generative neural network.

In some cases of the sixth aspect, the target denoising output is a noise component sampled to generate the respective noisy representation.

In some cases of the sixth aspect, updating the trainable parameters of the improvement generative neural network is performed using a gradient descent optimization process.

Other features, aspects, and advantages of the subject matter will become apparent from the description, the drawings, and the claims.

BRIEF DESCRIPTION OF THE DRAWINGS

FIG. 1 shows a generative neural network training system.

FIG. 2 is a flow diagram of an example process for training a target generative neural network.

FIG. 3 is a flow diagram of an example process for generating a second data item using an improvement generative neural network.

FIG. 4 is a flow diagram of an example process for updating trainable parameters of a generative neural network.

FIG. 5 is an example of the performance of the described techniques.

FIG. 6 is an example of the performance of the described techniques.

FIG. 7 is an example of the performance of the described techniques.

FIG. 8 is an example of the performance of the described techniques.

Like reference numbers and designations in the various drawings indicate like elements.

DETAILED DESCRIPTION

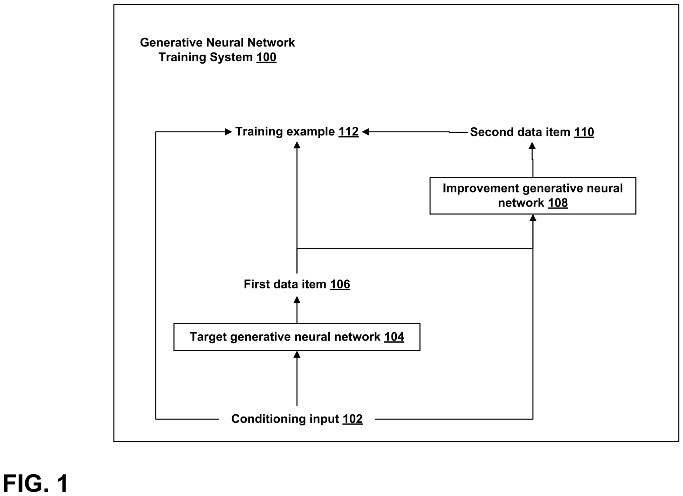

FIG. 1 shows an example generative neural network training system 100. The system 100 is an example of a system implemented as computer programs on one or more computers in one or more locations, in which the systems, components, and techniques described below can be implemented.

The system 100 trains a target generative neural network 104, which the system 100 can use to generate an output data item conditioned on a conditioning input.

Generally, the conditioning input characterizes one or more desired properties for the output data item, i.e., characterizes one or more properties that the final output data item generated by the system 100 should have.

More specifically, the system 100 can fine-tune the target generative neural network 104 to improve the performance of the target generative neural network 104 after the neural network 104 has originally been trained. That is, the system 100 fine-tunes, i.e., further trains, an already-trained generative neural network 104 so that the generative neural network 104 can more accurately generate output data items, e.g., output data items that align with preferences reflected in a preference data set.

Examples of conditioning inputs and data items are described below.

In some cases, the target generative neural network 104 is a diffusion neural network.

In particular, this specification generally describes the target generative neural network 104 being a diffusion neural network. More generally, however, the target generative neural network 104 can be any appropriate generative neural network that can map a conditioning input to an output data item, e.g., an auto-regressive generative neural network, a non-auto-regressive masked token generation neural network, a normalizing flows model, the generator of a generative adversarial neural network, and so on.

Thus, as described above, the system 100 performs "fine-tuning," i.e., further training, of the diffusion neural network 104 to improve the performance of the neural network 104.

In other words, prior to being trained as described in this specification, the system 100 or another training system has trained the diffusion neural network 104 on a different objective. In general, the diffusion neural network 104 can have been trained conventionally, using any diffusion model objective. As one example, the diffusion neural network 104 can have been trained on a set of training data items on a diffusion score matching objective or a variant thereof.

The diffusion neural network 104 can be any appropriate diffusion neural network that is configured to receive an input that includes a current (noisy) representation of an image and a conditioning input and to generate a denoising output.

In some implementations, the diffusion neural network 104 performs a diffusion process in output space, e.g., pixel space when the data items are images. In this example, when the data items are images, the data items ("representations") operated on and generated by the diffusion neural network 104 have values for each pixel that specify color values, e.g., RGB values or another color encoding scheme.

Examples of such diffusion neural networks include Imagen, as described in arXiv:2205.11487.

In some other implementations, the diffusion neural network 104 performs a diffusion process in latent space, e.g., in a latent space that is lower-dimensional than the output space. That is, the data items ("representations") operated on by the diffusion neural network are latent representations and the values in the representations are learned, latent values, e.g., rather than color values when the data items are images.

Examples of such diffusion neural networks include MobileDiffusion, as described in arxiv:2311.16567.

In these implementations, during training, the diffusion neural network 104 can be associated with an encoder to encode training data items into the latent space and, after training and to generate new output data items, a decoder neural network that receives an input that includes a latent representation of a data item and decodes the latent representation to reconstruct the data item.

Performing the further training is described in more detail below.

After the training, the system 100 or another inference system can use the diffusion neural network 104 to generate new data items conditioned on new conditioning inputs.

The diffusion neural network 104 can have any appropriate architecture that allows the neural network to map a diffusion input that includes an input data item that has the same dimensionality as the output data item to a denoising output that also has the same dimensionality as the output data item.

For example, when the output data item is an audio signal or an image, the diffusion neural network 104 can be a convolutional neural network, e.g., a U-Net or other architecture that maps one input of a given dimensionality to an output of the same dimensionality.

As another example, the diffusion neural network 104 can be a Transformer neural network that processes the diffusion input through a set of self-attention layers to generate the denoising output.

The neural network 104 can be conditioned on the conditioning input in any of a variety of ways.

As one example, the system 100 can use an encoder neural network to generate one or more embeddings that represent the conditioning input and the diffusion neural network 104 can include one or more cross-attention layers that each cross-attend into the one or more embeddings.

An embedding, as used in this specification, is an ordered collection of numerical values, e.g., a vector of floating point values or other types of values.

For example, when the conditioning input is text, the system 100 can use a text encoder neural network, e.g., a Transformer neural network, to generate a fixed or variable number of text embeddings that represent the conditioning input.

When the conditioning input is an image, the system 100 can use an image encoder neural network, e.g., a convolutional neural network or a vision Transformer neural network, to generate a set of embeddings that represent the image.

When the conditioning input is audio, the system can use, e.g., an audio encoder neural network, e.g., an audio encoder neural network that has been trained jointly with a decoder neural network as part of a neural audio codec, to generate one or more embeddings that encode the audio.

When the conditioning input is a scalar value, the system 100 can use, e.g., an embedding matrix to map the scalar value or a one-hot representation of the scalar value to an embedding.

In some cases, the conditioning input includes multiple different types of inputs, e.g., two or more of text, images, bound values, or context embeddings.

In some of these cases, the system 100 can generate one or more initial embeddings for each of the different types of inputs, i.e., using an appropriate encoder neural network as described above, and then process the initial embeddings for all of the different types of inputs using a Transformer encoder neural network to update each of the initial embeddings to generate a set of final embeddings. The one or more cross-attention layers within the diffusion neural network can then cross-attend into the set of final embeddings.

In others of these cases, different cross-attention layers within the diffusion neural network 104 can cross-attend into embeddings of different types of conditioning inputs.

In yet others of these cases, the system 100 can concatenate the initial embeddings of the different types of inputs along the sequence dimension and then the one or more cross-attention layers can cross-attend into the concatenated set of final embeddings.

As another example, the diffusion neural network 104 can include one or more other types of neural network layers that are conditioned on the one or more embeddings. Examples of such layers include Feature-wise Linear Modulation (FiLM) layers, layers with conditional gated activation functions, and so on.

The diffusion input at any given updating iteration can also include data defining a noise level for the iteration. Generally, each updating iteration has a corresponding time step $t$ and the noise level for the iteration depends on the time step. For example, the noise level can be a decreasing function of the time step $t$. Examples of such functions include a linear function, a cosine function, and a sigmoid function. In these cases, data identifying the noise level, the time step, or both can be embedded using an appropriate neural network, e.g., a multi-layer perceptron (MLP) and used to condition the diffusion neural network 104 as described above for the conditioning input.

More specifically, to fine-tune (i.e., further train, i.e., train) the target generative neural network 104, the system 100 receives a conditioning input 102.

The system 100 processes the conditioning input 102 using the generative neural network 104 (also referred to as the "target generative neural network 104") to generate a first data item 106. For example, when the generative neural network 104 is a diffusion neural network, the system 100 performs a reverse diffusion process using the diffusion neural network 104 conditioned on the conditioning input 102 to generate the first data item 106.

The system 100 processes the conditioning input 102 and the first data item 106 generated by the target generative neural network 104 using an improvement generative neural network 108 to generate a second data item 110. The second data item 110 is generally an "improved" data item that is preferred over the first data item 106 as a response to the conditioning input 102.

The improvement generative neural network 108 can have any of the implementations and architectures described above for the target generative neural network 104.

In some implementations, the improvement generative neural network 108 can have the same underlying architecture as the target generative neural network 104 but is also able to accept an additional input. For example, if the target generative neural network 104 is a U-Net based diffusion model, the improvement generative neural network 108 can be the same U-Net architecture but with additional input channels added to its first convolutional layer to process a representation of the first data item 106.

The system 100 generates a training example 112 that (i) includes the conditioning input 102, the first data item 106, and the second data item 110 and (ii) indicates that the second data item 110 is preferred over the first data item 106 as an output generated in response to the conditioning input 102.

The system 100 then trains the target generative neural network 104 on training data that includes the training example 112.

For example, the system 100 can train the generative neural network 104 on a preference learning objective, e.g., a supervised objective that, for each training example 112, is based on which data item in the training example 112 is preferred. One example of such an objective is the direct preference optimization (DPO) objective. Another example is the Identity Preference Optimization (IPO) objective.

The system 100 can iteratively perform the training process across multiple training iterations, i.e., at each training iteration, the system 100 can generate training data using the generative neural network 104 and improvement generative neural network 108 and then train the generative neural network 104 using the generated training data.

Some examples of data items and conditioning inputs (e.g., a conditioning input 102 for training or a conditioning input for generating a final output data item) now follow.

Generally, the conditioning input characterizes one or more desired properties for the data item, i.e., characterizes one or more properties that the final data item generated by the system 100 should have.

The system 100 can be configured to generate any of a variety of output data items conditioned on any of a variety of conditioning inputs.

For example, the system 100 can be configured to generate audio data, e.g., a waveform of audio or a spectrogram, e.g., a mel-spectrogram or a spectrogram where the frequencies are in a different scale, of the audio.

In this example, the conditioning input can be text or features of text that the audio should represent, i.e., so that the system 100 serves as a text-to-speech machine learning model that converts text or features of the text to audio data for an utterance of the text being spoken.

As another example, the conditioning input can identify a desired speaker for the audio, i.e., so that the system 100 generates audio data that represents speech by the desired speaker.

As another example, the conditioning input can characterize properties of a song or other piece of music, e.g., lyrics, genre, and so on, so that the system 100 generates a piece of music that has the properties characterized by the conditioning input.

As another example, the conditioning input can specify a classification for the audio data into a class from a set of possible classes, so that the system 100 generates audio data that belongs to the class. For example, the classes can represent types of musical instruments or other audio emitting devices, i.e., so that the system 100 generates audio that is emitted by the corresponding class, or types of animals, i.e., so that the system 100 generates audio that represents noises generated by the corresponding animal, and so on.

As another particular example, the data item can be an image, such that the system 100 can perform conditional image generation by generating the intensity values of the pixels of the image. In general the conditioning input can specify one or more characteristics for the image.

In this particular example, the conditioning input can be a sequence of text and the output data item can be an image that describes the text, i.e., the conditioning input can be a caption for the output image.

As yet another particular example, the conditioning input can be an object detection input that specifies one or more bounding boxes and, optionally, a respective type of object that should be depicted in each bounding box.

As yet another particular example, the conditioning input can specify an object class from a plurality of object classes to which an object depicted in the output image should belong.

As another example, the conditioning input can specify one or more images.

For example, the conditioning input can specify an image at a first resolution and the output data item can include the image at a second, higher resolution.

For example, the conditioning input can specify an image and the output data item can comprise a de-noised, enhanced, stylized, or otherwise edited version of the image.

As yet another particular example, the conditioning input can specify an image including a target entity for detection, e.g., a tumor, and the output data item can comprise the image without the target entity, e.g., to facilitate detection of the target entity by comparing the images.

As yet another particular example, the conditioning input can be a segmentation that assigns each of a plurality of pixels of the output image to a category from a set of categories, e.g., that assigns to each pixel a respective one of the category.

As yet another example, the conditioning input can be a different type of structured input, e.g., a mesh or a graph that specifies properties of the image to be generated.

More generally, the conditioning input can include one or more different types of inputs of one or more different modalities, e.g., only text, only one or more images, both text and one or more images, and so on.

As yet another example, the output data item can be a video. Again the conditioning input can specify one or more characteristics for the video.

As a particular example, the conditioning input can include text and the output data item can be a video described by the text.

As yet another particular example, the conditioning input can include one or more images and the output data item can be a video that completes the one or images, e.g., video starting from the one or more images.

More generally, the task of generating the output data item can be any task that outputs continuous data conditioned on a conditioning input. For example, the output can be an output of a different sensor, e.g., a lidar point cloud, a radar point cloud, an electrocardiogram reading, and so on, and the conditioning input can represent the type of data that should be measured by the sensor. Where a discrete output is desired this can be obtained, e.g., by thresholding the outputs generated by the diffusion neural network.

In some applications, the output data item can be used in a control task to control an action of a mechanical agent acting in a real-world environment to perform a mechanical task. For example, the output data item can be processed by a policy neural network of the agent to select one or more actions to be performed by the agent as part of the task. The agent may then perform the one or more actions. The output data item (e.g., image) can, for example, characterize a state of the real-world environment that is predicted to be obtained by the agent performing the one or more actions. The conditioning input can, e.g., specify a state of the real-world environment and the one or more actions. As another example the conditioning input can specify a state of the real-world environment and the output data item can be used to select one or more actions to be performed by the mechanical agent to perform a task (i.e., the diffusion neural network can represent an action selection policy).

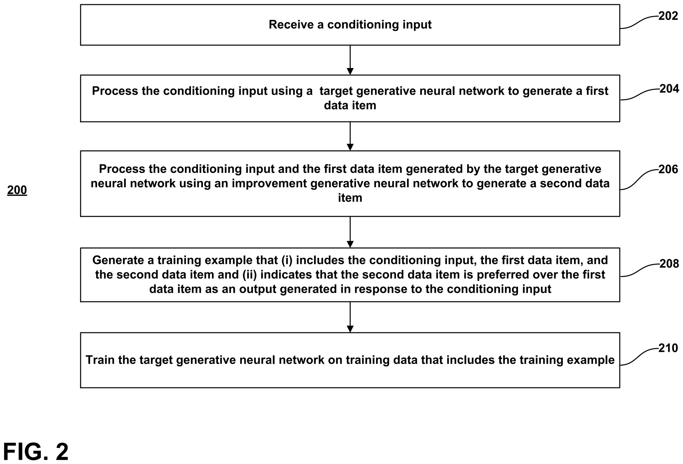

FIG. 2 is a flow diagram of an example process 200 for training a target generative neural network. For convenience, the process 200 will be described as being performed by a system of one or more computers located in one or more locations. For example, a generative neural network training system, e.g., the generative neural network training system 100 of FIG. 1, appropriately programmed in accordance with this specification, can perform the process 200.

The target generative neural network can have any of a variety of neural network architectures. That is, the target generative neural network can have any appropriate architecture in any appropriate configuration such that the target generative neural network can generate a data item conditioned on a conditioning input, including fully connected layers, convolutional layers, recurrent layers, attention-based layers, and so on, as is appropriate. Some examples of the generative neural networks are variational auto-encoders, generative adversarial networks, or diffusion neural networks.

In some implementations, the target generative neural network is a diffusion neural network. For example, the target generative neural network can be an Imagen model.

To train the target generative neural network, the system, at each of a plurality of training iterations, performs the following steps.

The system receives a conditioning input (step 202).

The system can receive the conditioning input from any of a variety of sources. For example, the system can receive the conditioning input from a user, system maintained data, or another system.

As a particular example, the system can receive the conditioning input from a user via a user device (e.g., a smartphone, laptop computer, desktop computer, and so on) over a network connection (e.g., local area network, cloud network, the internet, and so on).

As described above, the conditioning input can be data that characterizes one or more desired properties for a data item to be generated.

In some cases, the conditioning input includes a text input.

Some examples of conditioning inputs include text for text-to-speech synthesis, an image to be edited or enhanced, or a combination of text and images for video generation.

The system processes the conditioning input using a target generative neural network to generate a first data item (step 204).

As described above, the first data item can be any of a variety of types of continuous data, including audio data, an image, or a video. For example, the first data item can be a spectrogram representing a piece of music, a frame of a video, or an image corresponding to a text description.

In some implementations, the first data is an image. For example, a target diffusion neural network can generate an image by performing a reverse diffusion process. For example, the system can iteratively apply the target neural network to generate denoising output to then remove the noise from initial random noise over a series of timesteps, conditioned on the condition input, until a clean image is formed. So, for example, if the system receives a conditioning input of a text prompt, such as "A guinea pig riding a motorcycle," the system can then use this conditioning input with the target diffusion neural network to generate a data item that is an image of "A guinea pig riding a motorcycle."

The system processes the conditioning input and the first data item generated by the target generative neural network using an improvement generative neural network to generate a second data item (step 206).

Generally, the second data item is of the same type and format as the first data item. As described above it is generally an "improved" version of the first data item (in the sense that it is preferred over the first data item as a response to the conditioning input). Therefore, any data type that the first data item can be, the second data item can also be.

In some implementations, the second data item is an image. For example, the second data item can be an image generated by the improvement generative neural network, which takes the first data item (e.g., an image) and the original conditioning input (e.g., a text prompt) as inputs to produce an improved image (i.e., the second data item).

As described above, the improvement generative neural network can be any neural network that can process a first data item and a conditioning input and produce a new, second data item that is considered an improvement over the original, first data item.

In some implementations, the improvement generative neural network is a diffusion neural network.

As a particular example, the improvement generative neural network can be a diffusion model based on the Imagen U-Net architecture, modified to accept an additional image condition (e.g., as the first data item) to a text condition (e.g., as the conditioning input) by adding four channels to its initial convolutional layer.

In some implementations, when the improvement generative neural network is a diffusion neural network, the system generates the second data item by initializing a representation, for example by sampling from a noise distribution, and then iteratively updating that representation over a plurality of update steps. At each step, the system uses the improvement diffusion neural network to generate a denoising output based on the current representation, the conditioning input, and the first data item, and then uses this output to update the representation.

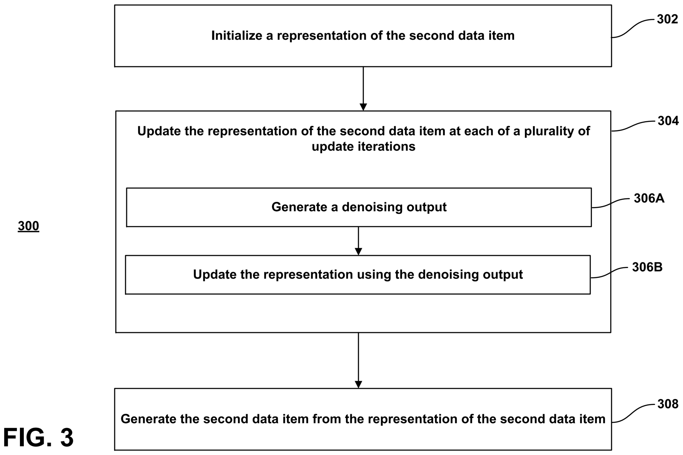

Further details of generating a second data item using an improvement generative neural network that is a diffusion neural network are described below with reference to FIG. 3.

In some implementations, prior to performing the plurality of training iterations of example process 200, the system obtains a preference data set. The preference data set includes a plurality of preference examples, where each preference example includes a respective example conditioning input, a respective winning data item, and a respective losing data item. Additionally, each preference example indicates that the respective winning data item is preferred over the respective losing data item as an output generated in response to the respective example conditioning input. Using the preference data set, the system trains the improvement generative neural network.

In some implementations, the system can train the improvement generative neural network on a single objective of learning to generate the winning data item from the losing data item and conditioning input.

In other implementations, the system can train the improvement generative neural network using a multi-task objective.

For example, the system can train the improvement generative neural network using a multi-task objective on the preference data set. The multi-task objective can include a primary task of learning to generate the winning data item from the losing data item and conditioning input, a second task of reconstructing a data item (either a winning or losing data item) given only the data item as a condition, and a third task of generating a data item (either a winning or losing data item) unconditionally.

Further details of how the system can train the improvement generative neural network are described below with reference to FIG. 3.

The system generates a training example that (i) includes the conditioning input, the first data item, and the second data item and (ii) indicates that the second data item is preferred over the first data item as an output generated in response to the conditioning input (step 208).

For example, step 208 can entail creating a new training example where the first data item, generated by the target model, serves as the less preferred data item, and the second data item, generated by the improvement model, serves as the preferred data item. Then, this newly created pair, along with the original conditioning input, forms a new training example that can be used to further train the target generative neural network.

The system trains the target generative neural network on training data that includes the training example (step 210). That is, the system updates the trainable parameters of the target generative neural network.

In some implementations, for step 210, the system trains the target generative neural network on a supervised objective that, for each training example, is based on which data item in the training example is preferred.

For example, given a training example that includes a first data item that is a less-preferred image and a second data item that is a preferred image for the same text conditioning input, the system can train the target generative neural network on a supervised objective that will increase the probability that the target generative neural network will generate the preferred image over the less-preferred image.

In some cases, the supervised objective is a direct preference optimization (DPO) objective.

For example, the system can use a DPO objective to train the target generative neural network directly on the preference pairs to align the target neural network outputs with the preferences.

As a particular example, the DPO objective can be

$$-\mathbb{E}_{c,x_w,x_l \sim \mathcal{D}}[\log\, \sigma(\beta \log\, \frac{p_\theta(x_w|c)}{p_{ref}(x_w|c)} - \frac{p_\theta(x_l|c)}{p_{ref}(x_l|c)})],$$

where $c$ is a conditioning input; $x_l$ is a less-preferred first data item; $x_w$ is a preferred second data item; a training example includes $c$, $x_w$, $x_l$; $\mathcal{D} = \{c, x_w, x_l\}$ represents a training data set of training examples (e.g., generated by the system as described above), $p_\theta$ represents that target generative neural network with parameters $\theta$ to be updated; $p_{ref}$ represents the target generative neural network with frozen parameter values prior to training the generative neural network (e.g., through example process 200); $p_\theta(x|c)$ represents the probability assigned by the target generative neural network (with trainable parameters $\theta$) to an output $x$ (e.g., $x_w$ or $x_l$) given the conditioning input $c$; $p_{ref}(x|c)$ represents the probability assigned by a reference model (e.g., the target generative neural network with frozen parameter values prior to training); $\beta$ is a scalar value; and $\sigma$ represents the sigmoidal function.

In some cases, the supervised objective is Identity Preference Optimization (IPO).

As a particular example, the IPO objective can be

$$\mathbb{E}_{c,x_w,x_l \sim \mathcal{D}}[(\log\, \frac{p_\theta(x_w|c)}{p_{ref}(x_w|c)} - \log\, \frac{p_\theta(x_l|c)}{p_{ref}(x_l|c)} - \frac{1}{2\beta})^2],$$

where the notation defined above for the particular example of the DPO objective applies here as well. This IPO objective penalizes deviations from a target margin (i.e., $\frac{1}{2\beta}$) quadratically (i.e., using a squared difference).

In some implementations, the target generative neural network is a diffusion neural network, and the supervised objective is a diffusion DPO objective.

As a particular example, the DPO objective can be

$$-\mathbb{E}_{c,x_l,x_w \sim \mathcal{D},t}[\log\, \sigma(-\beta T(\|\epsilon^w - \epsilon_\theta(x_t^w,t,c)\|_2^2 + \|\epsilon^l - \epsilon_{ref}(x_t^l,t,c)\|_2^2 - \|\epsilon^w$$
$$- \epsilon_{ref}(x_t^w,t,c)\|_2^2 - \|\epsilon^l - \epsilon_\theta(x_t^l,t,c)\|_2^2))],$$

where $c$ is the conditioning input; $x_w$ is the preferred second data item; $x_l$ is the less-preferred first data item; $t$ is a diffusion timestep; $\beta$ is a scalar hyperparameter; $T$ is the total number of diffusion timesteps; $\epsilon^w$ and $\epsilon^l$ are, respectively, target noise components sampled to generate noisy representations of the winning and losing data items; $x_t^w$ and $x_t^l$ are, respectively, the noisy representations of the winning and losing data items at timestep $t$; $\epsilon_\theta$ is a denoising output generated by the target generative neural network with trainable parameters $\theta$; and $\epsilon_{ref}$ is a denoising output generated by a reference model, e.g., the target generative neural network with frozen parameter values prior to the current training.

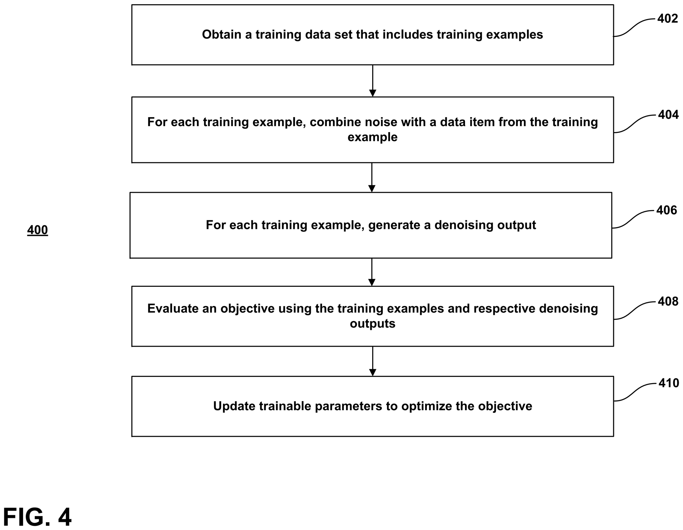

Further details for updating trainable parameters of a generative neural network (e.g., the target generative neural network) will be provided below with reference to FIG. 4.

The steps 202-210 are repeated iteratively until one or more criteria are met. For example, the system completes a fixed number of training iterations, or the performance of the target generative neural network ceases to improve.

In some implementations, after the system trains the target generative neural network (e.g., as described above), the system receives a conditioning input (e.g., a new conditioning input). The system can then process the conditioning input using a target generative neural network to generate one or more output data items, where the generative neural network has been trained (e.g., by performing example process 200 described above).

The described techniques enable the system to fine-tune the target generative neural network through an iterative, online process. By using the improvement generative neural network to dynamically generate preferred training targets (i.e., second data items) from the current outputs of the target generative neural network (i.e., first data items), the system can continuously improve the target network's performance. This process allows for fine-tuning even when no additional, pre-existing preference data is available and without requiring data that explicitly indicates the quality of any given generated data item.

FIG. 3 is a flow diagram of an example process 300 for generating a second data item using an improvement generative neural network. For convenience, the process 300 will be described as being performed by a system of one or more computers located in one or more locations. For example, a generative neural network training system, e.g., the generative neural network training system 100 of FIG. 1, appropriately programmed in accordance with this specification, can perform the process 300.

For example process 300, the improvement generative neural network is a diffusion neural network, and the system processes the conditioning input and the first data item generated by the target generative neural network using the improvement generative neural network to generate a second data item.

More specifically, the system initializes a representation of the second data item (step 302).

A representation of the second data item can refer to the data structure that the diffusion neural network operates on during the generative process (i.e., the reverse diffusion process). In some cases, this is a pixel-space representation, e.g., a tensor where values correspond directly to the color channels (like RGB) of the pixels in an image. In other cases, it is a latent-space representation, which is a lower-dimensional tensor of learned feature values that compactly encodes an image.

In some implementations, the system initializes the representation by sampling at least some of the values in the representation from a noise distribution.

For example, the system can sample noise from a noise distribution, e.g., probability distribution, e.g., a Gaussian probability distribution, with the same number of dimensions as the number of pixels of the second data item when it is an image.

For example, when the second data item is a latent representation of an image, the system samples noise from a noise distribution in the lower-dimensional latent space. This initial noisy latent representation is then used as the starting point for the reverse diffusion process.

The system updates the representation of the second data item at each of a plurality of update iterations (step 304). Each update iteration includes steps 306A and 306B below.

The system generates a denoising output (step 306A).

To generate the denoising output, the system processes a first diffusion input that includes (i) the representation of the second data item, (ii) a representation of the conditioning input, and (iii) a representation of the first data item using the diffusion neural network to generate a first denoising output.

In some cases, the denoising output is an estimate of a noise component of the representation of the second data item.

For example, the improvement generative neural network, which is a diffusion neural network, acts as a denoiser. At each update iteration or timestep $t$, the system provides the improvement neural network with the current noisy representation of the second data item ($x'$), the first data item ($x$), and the conditioning input ($c$). The improvement neural network then processes these inputs to predict the noise that is present in $x'$. This prediction is the first denoising output, which can be represented by the notation $\varepsilon_\phi(x'|x, c, t)$, where $\varepsilon_\phi$ is the denoising function of the improvement neural network with parameters $\phi$.

In some implementations, when the system generates a denoising output, the system further processes a second diffusion input that includes (i) the representation of the second data item and (ii) the representation of the first data item and (iii) a null conditioning representation using the diffusion neural network to generate a second denoising output. Then the system combines at least the first and second denoising outputs to generate the denoising output.

A null conditioning representation is a designated input, e.g., a tensor of all zeros or a specific learned embedding, that indicates to the neural network that its output should not be conditioned on the corresponding conditioning representation.

For example, to better guide the generation process (i.e., reverse diffusion process), the system can generate a second denoising output by providing the improvement neural network with a null conditioning representation (e.g., an empty text prompt) instead of the actual conditioning input. This second denoising output can be represented as $\varepsilon_\phi(x'|x, \emptyset, t)$. The system can then generate the final denoising output ($\bar{\varepsilon}_\phi$) by combining the first and second denoising outputs, for example, according to the equation $\bar{\varepsilon}_\phi(x'|x, c, t) = (1 - \lambda)\varepsilon_\phi(x'|x, c, t) - (\lambda)\varepsilon_\phi(x'|x, \emptyset, t)$ where $\lambda$ is a scalar weighting factor that balances the influence of the two outputs.

In some implementations, when the system generates a denoising output, the system further processes a third diffusion input that includes (i) the representation of the second data item (ii) a null data item representation and (iii) the null conditioning representation using the diffusion neural network to generate a third denoising output. The system then combines the first, second, and third denoising outputs to generate the denoising output.

Similar to the null conditioning representation, a null data item representation is a designated input that indicates that the output should not be conditioned on a corresponding data item. For example, a null data item representation can be used in place of a representation of the first data item.

In some implementations, to combine the first, second, and third denoising outputs to generate the denoising output, the system combines the first, second, and third denoising outputs in accordance with a first guidance weight for the second denoising output and a second guidance weight for the third denoising output to generate the denoising output.

For example, the system can generate a third, fully unconditional denoising output by providing the improvement neural network with both a null data item representation and a null conditioning representation. This third denoising output can be represented as $\varepsilon_\phi(x'|\varnothing, \varnothing, t)$. The final denoising output can then be generated by combining all three denoising outputs according to the equation: $\bar{\varepsilon}_\phi(x'|x, c, t) = \varepsilon_\phi(x'|\varnothing, \varnothing, t) + S_I(\varepsilon_\phi(x'|x, \varnothing, t) - \varepsilon_\phi(x'|\varnothing, \varnothing, t)) + S_T(\varepsilon_\phi(x'|x, c, t) - \varepsilon_\phi(x'|x, \varnothing, t))$, where $s_I$ is the first guidance weight and $S_T$ is the second guidance weight.

The system updates the representation using the denoising output (step 306B).

For example, the system can update the representation by using the final denoising output (e.g., the predicted noise) to perform one step of the reverse diffusion process, as defined by a predetermined scheduler. This single step reverse diffusion process removes a small amount of noise from the current representation. If the representation is in pixel space, this can involve directly modifying the pixel values. If the representation is in latent space, this can involve modifying the latent feature values.

After the system updates the representation of the second data item at each of a plurality of update iterations, the system generates the second data item from the representation of the second data item (step 308).

After the final update iteration, the system's representation is fully denoised. For example, if the representation is in pixel space, this final representation is the second data item (e.g., the final image). If the representation is in latent space, the system processes this final latent representation through a decoder neural network to convert it from the latent space back into pixel space, thereby generating the final second data item.

As described above, in some implementations, prior to performing the plurality of training iterations (e.g., example process 200 described above), the system obtains a preference data set. The preference data set includes a plurality of preference examples, where each preference example includes a respective example conditioning input, a respective winning data item, and a respective losing data item. Additionally, each preference example indicates that the respective winning data item is preferred over the respective losing data item as an output generated in response to the respective example conditioning input. Using the preference data set, the system trains the improvement generative neural network. That is, the system updates the trainable parameters of the improvement generative neural network.

In some implementations, to train the improvement generative neural network, the system trains the improvement generative neural network on a first objective that measures, for a given preference example, an error between a target denoising output and a denoising output generated by processing a diffusion input using the diffusion neural network (i.e., the improvement generative neural network). The denoising input includes (i) a noisy representation of the winning data item in the preference example, (ii) a representation of the example conditioning input in the preference example, and (iii) a representation of the example losing data item in the preference example.

In some cases, when the denoising output is an estimate of a noise component of the representation of the second data item, the target denoising output is noise sampled to generate the noisy representation of the winning data item. For example, if a noisy representation of a winning image is created by adding a specific noise sample to the clean winning image, that same noise sample serves as the target denoising output that the improvement neural network is trained to predict.

For example, the first training objective can be represented by

$$\mathbb{E}_{\epsilon \sim \mathcal{N}(0,I), x_w, x_l, c, t}[\|\epsilon - \epsilon_\phi(x_t|x_l, c, t)\|^2]$$ , which computes the mean squared error between the target denoising output and the denoising output generated by the improvement generative neural network. In this function, E is the expected value; $\varepsilon \sim \mathcal{N}(0, I)$ is the target denoising output, which is a noise component sampled from a standard Gaussian distribution; $x_w$ is the winning data item; $x_l$ is the losing data item; $c$ is the conditioning input; $t$ is the diffusion timestep; and $\varepsilon_\phi(x_t|x_l, c, t)$ is the denoising output generated by the improvement neural network. The term $x_t$ is the noisy representation of the winning data item, generated according to the equation $x_t = \sqrt{\overline{\alpha_t}} x_w + \sqrt{1 - \overline{\alpha_t}} \epsilon$ , where $\overline{\alpha_t}$ is a parameter from a predefined noise schedule corresponding to timestep $t$.

In some cases, to train the improvement generative neural network, the system trains the improvement generative neural network on a second objective that measures, for a given data item sampled from the losing and winning data items in the preference examples, an error between a target denoising output and a denoising output generated by processing a diffusion input using the diffusion neural network (i.e., the improvement generative neural network). The denoising input includes (i) a noisy representation of the given data item in the preference example, (ii) a representation of the given data item and (iii) a null conditioning representation.

In some cases, when the denoising output is an estimate of a noise component of the representation of the second data item, the target denoising output is noise sampled to generate the noisy representation of the given data item. For example, when a noisy representation of a given data item (which can be either a winning or losing item) is created by adding a specific noise sample, that same noise sample serves as the target denoising output for this objective.

For example, the second training objective, a reconstruction task, can be represented by the loss function $\mathbb{E}_{\epsilon \sim \mathcal{N}(0,I),x,c,t}[\|\epsilon - \epsilon_\phi(x'_t|x, \emptyset, t)\|^2]$. The term $x$ is a given data item, where $x \in \{x_w, x_l\}$, meaning it is sampled from the set of both winning and losing data items. The term $\epsilon_\phi(x'_t|x, \emptyset, t)$ is the denoising output generated by the improvement neural network, conditioned on the given data item $x$ and a null conditioning representation $\emptyset$. The term $x'_t$ is the noisy representation of the given data item, generated according to the equation $x'_t = \sqrt{\overline{\alpha}_t}x + \sqrt{1 - \overline{\alpha}_t}\epsilon$. All other notation is as defined immediately above.

In some cases, to train the improvement generative neural network, the system trains the improvement generative neural network on a third objective that measures, for a given data item sampled from the losing and winning data items in the preference examples, an error between a target denoising output and a denoising output generated by processing a diffusion input using the diffusion neural network (i.e., the improvement generative neural network). The denoising input includes (i) a noisy representation of the given data item in the preference example (ii) a null data item representation (iii) a null conditioning representation.

In some cases, when the denoising output is an estimate of a noise component of the representation of the second data item, the target denoising output is noise sampled to generate the noisy representation of the given data item. For example, the target denoising output is the specific noise sample that was used to create the noisy representation of the given data item.

For example, the third training objective, an unconditional task, can be represented by the loss function $\mathbb{E}_{\epsilon \sim \mathcal{N}(0,I),x,c,t}[\|\epsilon - \epsilon_\phi(x''_t|\emptyset, \emptyset, t)\|^2]$. The term $\epsilon_\phi(x''_t|\emptyset, \emptyset, t)$ is the denoising output generated by the improvement neural network, conditioned on both a null data item representation $\emptyset$ and a null conditioning representation $\emptyset$. The term $x''_t$ is the noisy representation of a given data item, generated according to the equation $x''_t = \sqrt{\overline{\alpha}_t}x + \sqrt{1 - \overline{\alpha}_t}\epsilon, x, c \sim \mathcal{D}$, where the data item $x$ and conditioning input $c$ are sampled from the preference data set, as indicated by $x, c \sim D$. All other notation is as defined immediately above.

Further details of updating trainable parameters of a generative neural network (e.g., the improvement generative neural network) will be provided below with reference to FIG. 4.

FIG. 4 is a flow diagram of an example process 400 for updating trainable parameters of a generative neural network. For convenience, the process 400 will be described as being performed by a system of one or more computers located in one or more locations. For example, a generative neural network training system, e.g., the generative neural network training system 100 of FIG. 1, appropriately programmed in accordance with this specification, can perform the process 400.

The system can use example process 400 to train either a target generative neural network (e.g., as described above in step 210) or an improvement generative neural network (e.g., as described above prior to the process 200 of FIG. 2). Example process 400 is for a generative neural network that is a diffusion neural network.

The system obtains a training data set that includes training examples (step 402).

For example, when the system trains the improvement generative neural network, the training data set can be an offline preference data set that includes winning and losing data items.

As another example, when the system trains the target generative neural network, the training data set can be the training examples generated by the system, e.g., as described above during process 200.

A training example generally includes a conditioning input and at least two data items that have a preference relationship with respect to the conditioning input (e.g., a winning and a losing data item from a preference data set, or a second, preferred data item and a first, less-preferred data item generated by the system).

For each training example, the system combines noise with a data item from the training example to generate a noisy representation of the data item (step 404).

For example, the system can sample a noise component from a Gaussian distribution and add it to a clean data item (e.g., a winning or a losing data item from a preference data set, or a second, preferred data item or a first, less-preferred data item generated by the system) to produce the noisy representation corresponding to a particular diffusion timestep.

For each training example, the system generates a denoising output using the generative neural network being trained (step 406).

The system processes the noisy representation of the data item and any relevant conditioning inputs from the training example using the generative neural network to generate the denoising output, which is an estimate of the noise component that was added in step 404.

The inputs the system uses to generate the denoising output correspond to the noisy representation created in step 404 and depend on which training objective is being evaluated, as described above with reference to FIG. 2 and FIG. 3.

For example, as described above in FIG.2 and FIG. 3, the system can generate $\epsilon_\theta(x_t^w, t, c), \epsilon_\theta(x_t^l, t, c)$ using the target generative neural network, or $\bar{\epsilon}_\phi(x'|x, c, t)$ using the improvement generative neural network.

The system evaluates an objective using the training examples and their respective denoising outputs (step 408).

The objective, measures the performance of the generative neural network by quantifying the error between the denoising outputs generated by the network and a target denoising output (e.g., the actual noise combined with the data item in step 404).

The specific objective depends on the training task. For example, the objective may be one of the multi-task mean-squared error objectives for training the improvement generative neural network described above with reference to FIG. 3, or the Diffusion DPO or IPO objectives for training the target generative neural network as described above with reference to FIG. 2.

The system updates the trainable parameters of the generative neural network to optimize the objective (step 410).

The system can update the trainable parameters of the generative neural network to optimize the objective in any variety of ways, e.g., gradient based method, evolutionary algorithm-based method, Bayesian optimization, etc.

For example, the system can optimize the objective using any of a variety of gradient descent techniques (e.g., batch gradient descent, stochastic gradient descent, or mini-batch gradient descent) that include the use of a backpropagation technique to estimate the gradient of the loss with respect to trainable parameters of the neural network and to update the learnable parameters accordingly.

Generally, the system repeats the above steps until one or more criteria are satisfied (e.g., the system performs a pre-determined number of iterations, the updates to the trainable parameters no longer exceed a pre-determined magnitude of change, a metric regarding a validation dataset exceeds a pre-determined value, and so on).

Algorithm 1 below is a specific example of the described techniques for fine-tuning the target generative neural network.

---

**Algorithm 1** Iterative DPO training of target generative neural network (i.e., target model) with the improvement generative neural network (i.e., improvement model).

**Input**: Improvement model $p_\phi^\dagger$, prompt set $\mathcal{D}_c$ (i.e., a set of condition inputs), initialized target model $p_\theta$, number of iterations $T_{iter}$, number of samples $n$, training batch size $b$, text guidance weight $s_T$ (i.e., a first guidance weight), image guidance weight $s_I$ (i.e., a second guidance weight), number of training steps per iteration $T_{train}$

**for** $t_{iter} \in [1, T_{iter}]$ **do**
    Randomly sample $n$ images from $p_\theta$ conditioned on $\mathcal{D}_c$, and construct $\mathcal{D}_\ell$
    Randomly sample $n$ images from $p_\phi^\dagger$ conditioned on $\mathcal{D}_c$ and $\mathcal{D}_\ell$. With guidance weights $s_T$ and $s_I$, construct $D_w$
    **for** $t_{train} \in [1, T_{train}]$ **do**
      Compute an estimation of gradient using $-\mathbb{E}_{c, x_l, x_w \sim \mathcal{D}, t}[\log \sigma(-\beta T(\|\epsilon^w - \epsilon_\theta(x_t^w, t, c)\|_2^2 + \|\epsilon^l - \epsilon_{ref}(x_t^l, t, c)\|_2^2 - \|\epsilon^w - \epsilon_{ref}(x_t^w, t, c)\|_2^2 - \|\epsilon^l - \epsilon_\theta(x_t^l, t, c)\|_2^2))]$ with batch size b, and update θ
    **end for end for**

**Output**: Fine-tuned model $p_\theta$

---

Algorithm 1 describes the iterative training loop of, e.g., process 200. At each main iteration ($t_{iter}$), the current target generative neural network ($p_\theta$, e.g., network 104) generates a set of first data items ($\mathcal{D}_\ell$, e.g., data items 106). Then, the improvement generative neural network ( $p_\phi^\dagger$, e.g., network 108) generates a corresponding set of second, improved data items ($\mathcal{D}_w$, e.g., data items 110). These two sets form the preference data for an inner training loop. In this inner loop, which runs for $T_{train}$ steps, the parameters (θ) of the target generative neural network are updated using the DPO objective and the newly generated preference pairs. This entire process repeats for $T_{iter}$ iterations, resulting in a final, fine-tuned target generative neural network.

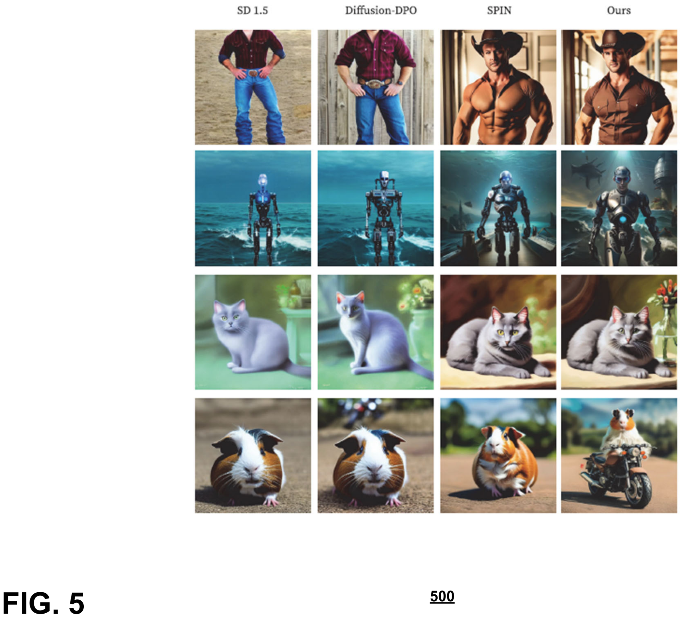

FIG. 5 is an example 500 of the performance of the described techniques.

More specifically, FIG. 5 shows a set of example output data items, which are images, generated in response to respective conditioning inputs, which are text prompts. The example 500 compares output data items generated by a target generative neural network trained using the described techniques ("Ours") with output data items generated using other techniques ("SD 1.5", "Diffusion-DPO" and "SPIN"). The example conditioning inputs include: "Beefy cowboy, tucked in shirt", "A cyborg on the ocean", "Cute grey cat, digital oil painting by Monet" and "A guinea pig riding a motorcycle." The output data items generated by the described techniques demonstrate improved alignment with the conditioning inputs and higher image quality compared to the other models.

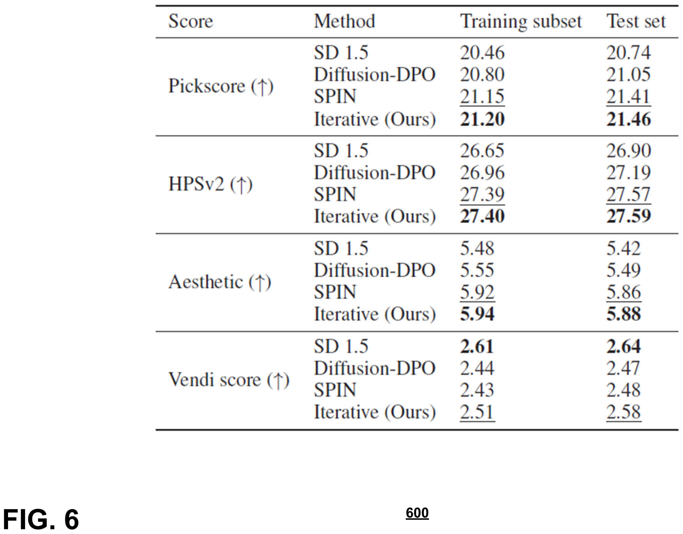

FIG. 6 is an example 600 of the performance of the described techniques.

More specifically, FIG. 6 is a table of quantitative results comparing the performance of a target generative neural network trained using the described techniques (i.e., the rows labeled "Iterative (Ours)") against the performance of other techniques (i.e., rows labeled ("SD 1.5", "Diffusion-DPO" and "SPIN"). Performance is measured through various metrics, including Pickscore, HPSv2, Aesthetic score, and Vendi score, which evaluate properties such as alignment with human preferences, image quality, and output diversity. The results indicate that the target generative neural network trained with the described techniques achieves improved scores for preference alignment and quality without a decrease in output diversity.

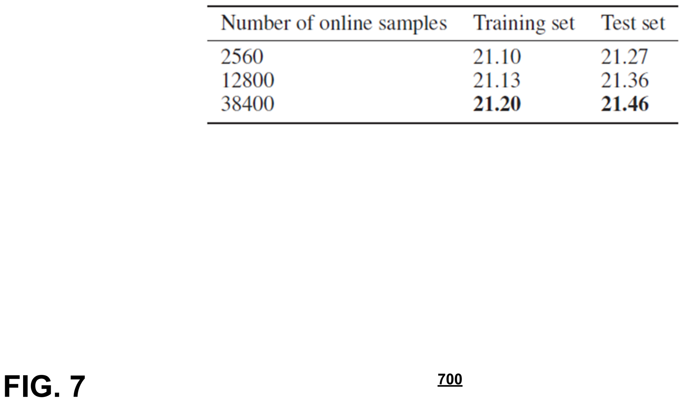

FIG. 7 is an example 700 of the performance of the described techniques.

More specifically, FIG. 7 is a table of results demonstrating the effect of the quantity of training examples generated during each training iteration on the performance of the target generative neural network. The table shows performance, as measured by Pickscore, when the target generative neural network is trained using different numbers of generated training examples (e.g., 2,560, 12,800, and 38,400) per iteration. The results indicate that increasing the number of training examples generated in each training iteration leads to improved performance of the target generative neural network.

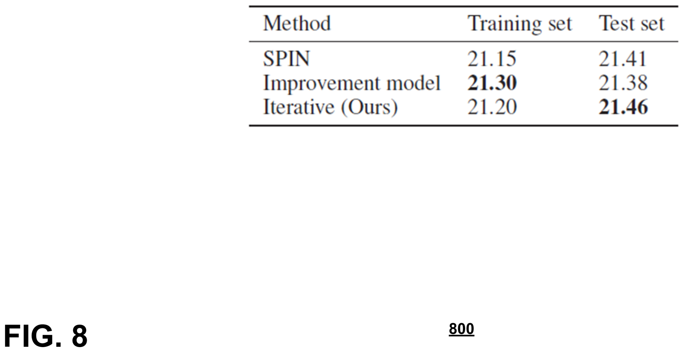

FIG. 8 is an example 800 of the performance of the described techniques.

More specifically, FIG. 8 is a table of results comparing the performance of different models, as measured by Pickscore. The row labeled "Improvement model" shows the performance of the improvement generative neural network when it is used directly to generate output data items at inference time. The row labeled "Iterative (Ours)" shows the performance of the final target generative neural network, which has been trained using the iterative process where the improvement generative neural network was used to generate training data. The table compares these two models against a baseline model ("SPIN"). The results indicate that the final target generative neural network ("Iterative (Ours)") achieves better generalization performance on a test set of conditioning inputs than using the improvement generative neural network directly for generation, demonstrating the effectiveness of the described iterative training techniques.

This specification uses the term "configured" in connection with systems and computer program components. For a system of one or more computers to be configured to perform particular operations or actions means that the system has installed on it software, firmware, hardware, or a combination of them that in operation cause the system to perform the operations or actions. For one or more computer programs to be configured to perform particular operations or actions means that the one or more programs include instructions that, when executed by data processing apparatus, cause the apparatus to perform the operations or actions.

Embodiments of the subject matter and the functional operations described in this specification can be implemented in digital electronic circuitry, in tangibly-embodied computer software or firmware, in computer hardware, including the structures disclosed in this specification and their structural equivalents, or in combinations of one or more of them. Embodiments of the subject matter described in this specification can be implemented as one or more computer programs, i.e., one or more modules of computer program instructions encoded on a tangible non transitory storage medium for execution by, or to control the operation of, data processing apparatus. The computer storage medium can be a machine-readable storage device, a machine-readable storage substrate, a random or serial access memory device, or a combination of one or more of them. Alternatively or in addition, the program instructions can be encoded on an artificially generated propagated signal, e.g., a machine-generated electrical, optical, or electromagnetic signal, that is generated to encode information for transmission to suitable receiver apparatus for execution by a data processing apparatus.

The term "data processing apparatus" refers to data processing hardware and encompasses all kinds of apparatus, devices, and machines for processing data, including by way of example a programmable processor, a computer, or multiple processors or computers. The apparatus can also be, or further include, special purpose logic circuitry, e.g., an FPGA (field programmable gate array) or an ASIC (application specific integrated circuit). The apparatus can optionally include, in addition to hardware, code that creates an execution environment for computer programs, e.g., code that constitutes processor firmware, a protocol stack, a database management system, an operating system, or a combination of one or more of them.

A computer program, which may also be referred to or described as a program, software, a software application, an app, a module, a software module, a script, or code, can be written in any form of programming language, including compiled or interpreted languages, or declarative or procedural languages; and it can be deployed in any form, including as a stand alone program or as a module, component, subroutine, or other unit suitable for use in a computing environment. A program may, but need not, correspond to a file in a file system. A program can be stored in a portion of a file that holds other programs or data, e.g., one or more scripts stored in a markup language document, in a single file dedicated to the program in question, or in multiple coordinated files, e.g., files that store one or more modules, sub programs, or portions of code. A computer program can be deployed to be executed on one computer or on multiple computers that are located at one site or distributed across multiple sites and interconnected by a data communication network.

In this specification, the term "database" is used broadly to refer to any collection of data: the data does not need to be structured in any particular way, or structured at all, and it can be stored on storage devices in one or more locations. Thus, for example, the index database can include multiple collections of data, each of which may be organized and accessed differently.

Similarly, in this specification the term "engine" is used broadly to refer to a software-based system, subsystem, or process that is programmed to perform one or more specific functions. Generally, an engine will be implemented as one or more software modules or components, installed on one or more computers in one or more locations. In some cases, one or more computers will be dedicated to a particular engine; in other cases, multiple engines can be installed and running on the same computer or computers.

The processes and logic flows described in this specification can be performed by one or more programmable computers executing one or more computer programs to perform functions by operating on input data and generating output. The processes and logic flows can also be performed by special purpose logic circuitry, e.g., an FPGA or an ASIC, or by a combination of special purpose logic circuitry and one or more programmed computers.

Computers suitable for the execution of a computer program can be based on general or special purpose microprocessors or both, or any other kind of central processing unit. Generally, a central processing unit will receive instructions and data from a read only memory or a random access memory or both. The essential elements of a computer are a central processing unit for performing or executing instructions and one or more memory devices for storing instructions and data. The central processing unit and the memory can be supplemented by, or incorporated in, special purpose logic circuitry. Generally, a computer will also include, or be operatively coupled to receive data from or transfer data to, or both, one or more mass storage devices for storing data, e.g., magnetic, magneto optical disks, or optical disks. However, a computer need not have such devices. Moreover, a computer can be embedded in another device, e.g., a mobile telephone, a personal digital assistant (PDA), a mobile audio or video player, a game console, a Global Positioning System (GPS) receiver, or a portable storage device, e.g., a universal serial bus (USB) flash drive, to name just a few.

Computer readable media suitable for storing computer program instructions and data include all forms of non volatile memory, media and memory devices, including by way of example semiconductor memory devices, e.g., EPROM, EEPROM, and flash memory devices; magnetic disks, e.g., internal hard disks or removable disks; magneto optical disks; and CD ROM and DVD-ROM disks.

To provide for interaction with a user, embodiments of the subject matter described in this specification can be implemented on a computer having a display device, e.g., a CRT (cathode ray tube) or LCD (liquid crystal display) monitor, for displaying information to the user and a keyboard and a pointing device, e.g., a mouse or a trackball, by which the user can provide input to the computer. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input. In addition, a computer can interact with a user by sending documents to and receiving documents from a device that is used by the user; for example, by sending web pages to a web browser on a user's device in response to requests received from the web browser. Also, a computer can interact with a user by sending text messages or other forms of message to a personal device, e.g., a smartphone that is running a messaging application, and receiving responsive messages from the user in return.

Data processing apparatus for implementing machine learning models can also include, for example, special-purpose hardware accelerator units for processing common and compute-intensive parts of machine learning training or production, i.e., inference, workloads.

Machine learning models can be implemented and deployed using a machine learning framework, e.g., a TensorFlow framework or a Jax framework.

Embodiments of the subject matter described in this specification can be implemented in a computing system that includes a back end component, e.g., as a data server, or that includes a middleware component, e.g., an application server, or that includes a front end component, e.g., a client computer having a graphical user interface, a web browser, or an app through which a user can interact with an implementation of the subject matter described in this specification, or any combination of one or more such back end, middleware, or front end components. The components of the system can be interconnected by any form or medium of digital data communication, e.g., a communication network. Examples of communication networks include a local area network (LAN) and a wide area network (WAN), e.g., the Internet.

The computing system can include clients and servers. A client and server are generally remote from each other and typically interact through a communication network. The relationship of client and server arises by virtue of computer programs running on the respective computers and having a client-server relationship to each other. In some embodiments, a server transmits data, e.g., an HTML page, to a user device, e.g., for purposes of displaying data to and receiving user input from a user interacting with the device, which acts as a client. Data generated at the user device, e.g., a result of the user interaction, can be received at the server from the device.

While this specification contains many specific implementation details, these should not be construed as limitations on the scope of any invention or on the scope of what may be claimed, but rather as descriptions of features that may be specific to particular embodiments of particular inventions. Certain features that are described in this specification in the context of separate embodiments can also be implemented in combination in a single embodiment. Conversely, various features that are described in the context of a single embodiment can also be implemented in multiple embodiments separately or in any suitable subcombination. Moreover, although features may be described above as acting in certain combinations and even initially be claimed as such, one or more features from a claimed combination can in some cases be excised from the combination, and the claimed combination may be directed to a subcombination or variation of a subcombination.

Similarly, while operations are depicted in the drawings and recited in the claims in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system modules and components in the embodiments described above should not be understood as requiring such separation in all embodiments, and it should be understood that the described program components and systems can generally be integrated together in a single software product or packaged into multiple software products.

Particular embodiments of the subject matter have been described. Other embodiments are within the scope of the following claims. For example, the actions recited in the claims can be performed in a different order and still achieve desirable results. As one example, the processes depicted in the accompanying figures do not necessarily require the particular order shown, or sequential order, to achieve desirable results. In some cases, multitasking and parallel processing may be advantageous.

## Claims

1. A method performed by one or more computers and for training a target generative neural network, the method comprising, at each of a plurality of training iterations:

    receiving a conditioning input;
    processing the conditioning input using the target generative neural network to generate a first data item;
    processing the conditioning input and the first data item generated by the target generative neural network using an improvement generative neural network to generate a second data item;
    generating a training example that (i) comprises the conditioning input, the first data item, and the second data item and (ii) indicates that the second data item is preferred over the first data item as an output generated in response to the conditioning input; and
    training the target generative neural network on training data that includes the training example.

2. The method of claim 1, wherein the target generative neural network is a diffusion neural network.

3. The method of claim 1 or claim 2, wherein the improvement generative neural network is a diffusion neural network.

4. The method of any preceding claim, wherein the first data item and the second data items are images and, optionally, wherein the conditioning input comprises a text input.

5. The method of any preceding claim, wherein the improvement generative neural network is a diffusion neural network, and wherein processing the conditioning input and the first data item generated by the target generative neural network using an improvement generative neural network to generate a second data item comprises:

    initializing a representation of the second data item;
    updating the representation of the second data item at each of a plurality of update iterations, the updating comprising:

generating a denoising output, the generating comprising processing a first diffusion input comprising (i) the representation of the second data item, (ii) a representation of the conditioning input, and (iii) a representation of the first data item using the diffusion neural network to generate a first denoising output; and
updating the representation using the denoising output; and

after the plurality of update iterations, generating the second data item from the representation of the second data item,
optionally, wherein initializing the representation comprises sampling at least some of the values in the representation from a noise distribution and/or the denoising output is an estimate of a noise component of the representation of the second data item.

6. The method of any one of claims 5, wherein generating a denoising output further comprises:

processing a second diffusion input comprising (i) the representation of the second data item and (ii) the representation of the first data item and (iii) a null conditioning representation using the diffusion neural network to generate a second denoising output; and
combining at least the first and second denoising outputs to generate the denoising output.

7. The method of claim 6, wherein generating a denoising output further comprises:

processing a third diffusion input comprising (i) the representation of the second data item (ii) a null data item representation and (iii) the null conditioning representation using the diffusion neural network to generate a third denoising output; and wherein
combining at least the first and second denoising outputs to generate the denoising output comprises:
combining the first, second, and third denoising outputs to generate the denoising output, and, optionally, wherein combining the first, second, and third denoising outputs to generate the denoising output comprises:
combining the first, second, and third denoising outputs in accordance with a first guidance weight for the second denoising output and a second guidance weight for the third denoising output to generate the denoising output.

8. The method of any preceding claim, further comprising, prior to performing the plurality of training iterations:

obtaining a preference data set, the preference data set comprising a plurality of preference examples, each preference example (i) comprising a respective example conditioning input, a respective winning data item, and a respective losing data item and (ii) indicating that the respective winning data item is preferred over the respective losing data item as an output generated in response to the respective example conditioning input; and
training the improvement generative neural network on the preference data set.

9. The method of claim 8, when dependent on claim 5, wherein training the improvement generative neural network comprises training the improvement generative neural network on a first objective that measures, for a given preference example, an error between a target denoising output and a denoising output generated by processing a diffusion input comprising (i) a noisy representation of the winning data item in the preference example, (ii) a representation of the example conditioning input in the preference example, and (iii) a representation of the example losing data item in the preference example using the diffusion neural network, optionally wherein the target denoising output is noise sampled to generate the noisy representation of the winning data item.

10. The method of claim 9, wherein training the improvement generative neural network comprises training the improvement generative neural network on a second objective that measures, for a given data item sampled from the losing and winning data items in the preference examples, an error between a target denoising output and a denoising output generated by processing a diffusion input comprising (i) a noisy representation of the given data item in the preference example, (ii) a representation of the given data item and (iii) a null conditioning representation using the diffusion neural network, optionally wherein the target denoising output is noise sampled to generate the noisy representation of the given data item.

11. The method of any one of claims 9-10, wherein training the improvement generative neural network comprises training the improvement generative neural network on a third objective that measures, for a given data item sampled from the losing and winning data items in the preference examples, an error between a target denoising output and a denoising output generated by processing a diffusion input comprising (i) a noisy representation of the given data item in the preference example (ii) a null data item representation (iii) a null conditioning representation using the diffusion neural network, optionally wherein the target denoising output is noise sampled to generate the noisy representation of the given data item.

12. The method of any preceding claim, wherein training the target generative neural network on training data that includes the training example comprises training the target generative neural network on a supervised objective that, for each training example, is based on which data item in the training example is preferred, optionally wherein the supervised objective is a direct preference optimization (DPO) objective and/or Identity Preference Optimization (IPO), and optionally wherein the target generative neural network is a diffusion neural network, and wherein the supervised objective is a diffusion DPO objective.

13. A method performed by one or more computers, the method comprising:

receiving a conditioning input; and
processing the conditioning input using a target generative neural network to generate one or more output data items, wherein the generative neural network has been trained by performing the respective operations of any preceding claim.

14. A system comprising one or more computers and one or more storage devices storing instructions that when executed by the one or more computers cause the one more computers to perform the operations of the respective method of any one of claims 1-13.

15. One or more computer storage media storing instructions that when executed by one or more computers cause the one more computers to perform the operations of the respective method of any one of claims 1-13.

**Generative Neural Network
Training System 100**

Training example 112 ◄────────── Second data item 110

**Improvement generative neural
network 108**

**First data item 106**

**Target generative neural network 104**

**Conditioning input 102**

# FIG. 1

| Receive a conditioning input | 202 |

| Process the conditioning input using a target generative neural network to generate a first data item | 204 |

200

| Process the conditioning input and the first data item generated by the target generative neural network using an improvement generative neural network to generate a second data item | 206 |

| Generate a training example that (i) includes the conditioning input, the first data item, and the second data item and (ii) indicates that the second data item is preferred over the first data item as an output generated in response to the conditioning input | 208 |

| Train the target generative neural network on training data that includes the training example | 210 |

# FIG. 2

**FIG. 3**

300

| Initialize a representation of the second data item | — 302 |

↓

| Update the representation of the second data item at each of a plurality of update iterations | — 304 |
| Generate a denoising output | — 306A |
| ↓ |
| Update the representation using the denoising output | — 306B |

↓

| Generate the second data item from the representation of the second data item | — 308 |

| Obtain a training data set that includes training examples | ⌐402 |

↓

| For each training example, combine noise with a data item from the training example | ⌐404 |

↓

**400**

| For each training example, generate a denoising output | ⌐406 |

↓

| Evaluate an objective using the training examples and respective denoising outputs | ⌐408 |

↓

| Update trainable parameters to optimize the objective | ⌐410 |

# FIG. 4

**FIG. 5**

500

| Score | Method | Training subset | Test set |
|---|---|---|---|
| Pickscore (↑) | SD 1.5 | 20.46 | 20.74 |
| | Diffusion-DPO | 20.80 | 21.05 |
| | SPIN | 21.15 | 21.41 |
| | Iterative (Ours) | **21.20** | **21.46** |
| HPSv2 (↑) | SD 1.5 | 26.65 | 26.90 |
| | Diffusion-DPO | 26.96 | 27.19 |
| | SPIN | 27.39 | 27.57 |
| | Iterative (Ours) | **27.40** | **27.59** |
| Aesthetic (↑) | SD 1.5 | 5.48 | 5.42 |
| | Diffusion-DPO | 5.55 | 5.49 |
| | SPIN | 5.92 | 5.86 |
| | Iterative (Ours) | **5.94** | **5.88** |
| Vendi score (↑) | SD 1.5 | **2.61** | **2.64** |
| | Diffusion-DPO | 2.44 | 2.47 |
| | SPIN | 2.43 | 2.48 |
| | Iterative (Ours) | 2.51 | 2.58 |

**FIG. 6**

600

| Number of online samples | Training set | Test set |
|---|---|---|
| 2560 | 21.10 | 21.27 |
| 12800 | 21.13 | 21.36 |
| 38400 | **21.20** | **21.46** |

**FIG. 7**

700

| Method | Training set | Test set |
|---|---|---|
| SPIN | 21.15 | 21.41 |
| Improvement model | **21.30** | 21.38 |
| Iterative (Ours) | 21.20 | **21.46** |

**FIG. 8**

800

Europäisches
Patentamt
European
Patent Office
Office européen
des brevets

# EUROPEAN SEARCH REPORT

**Application Number**

EP 25 20 6713

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | RONGZHI ZHANG ET AL: "PLaD: Preference-based Large Language Model Distillation with Pseudo-Preference Pairs", ARXIV.ORG, CORNELL UNIVERSITY LIBRARY, 201 OLIN LIBRARY CORNELL UNIVERSITY ITHACA, NY 14853, 6 June 2024 (2024-06-06), XP091778605, | 1-3,5-15 | INV. G06N3/045 G06N3/0475 G06N3/08 |
| A | * the whole document * ----- | 4 | |

**TECHNICAL FIELDS SEARCHED (IPC)**

G06N

The present search report has been drawn up for all claims

| Place of search | Date of completion of the search | Examiner |
|---|---|---|
| The Hague | 18 December 2025 | Nourestani, S |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)